# EUROPEAN PATENT SPECIFICATION

(11) **EP 3 299 717 B1**
(45) Date of publication and mention of the grant of the patent: **01.07.2020**
(21) Application number: 17192932.6
(22) Date of filing: 25.09.2017
(51) Int. Cl.: F23D 14/14, A47J 37/07, F24C 3/10

(54) **BURNER FOR AN OVEN OR GRILL**
BRENNER FÜR EINEN OFEN ODER EINEN GRILL
BRÛLEUR POUR UN FOUR OU UN GRIL

(30) Priority: 27.09.2016 IT 201600096554
(43) Date of publication of application: 28.03.2018
(73) Proprietor: Actek S.r.l., 23893 Cassago Brianza (Lecco) (IT)
(72) Inventor: AMATI, Enrico, 23893 CASSAGO BRIANZA (IT); AMATI, Carlo, 23893 CASSAGO BRIANZA (IT)
(74) Representative: Tansini, Elio Fabrizio

(56) References cited:
- US-A1- 2008 210 217
- US-A1- 2008 227 041
- US-A1- 2013 312 645
- US-A1- 2014 170 580

## Description

The present invention relates to a burner for an oven or grill.

In particular, the present invention relates to a burner especially used for grill function in the respective gas ovens.

As is well known, especially the burners used for grill have a substantially box-shaped body, made of metal sheet and defining inside a chamber for the flow of a combustible fluid (gas) .

To this end, the chamber is in fluid communication with a gas supply source through suitable connection ducts.

The box-shaped body, which extends mostly along a predefined lying plane, has a first surface facing the baking chamber of the oven and a second surface opposite to the first.

The first surface is preferably perforated to allow the flow of gas and define combustion on this surface.

To enable a homogeneous combustion, a number of holes of different width are provided, extending over the entire first surface and according to a predetermined design which ensures the homogeneous heat propagation.

The box-shaped body thus obtained is also generally coupled to one or more support elements of the respective accessories, such as spark plugs. More specifically, each support element is made of a bracket defining a housing of the respective accessory.

The bracket is appropriately anchored to the box-shaped body by means of tightening systems, such as screws or welds. US 2008/0210217 A1 discloses such a box-shaped burner and provides the basis for the two-part form of claim 1.

In particular, for the spark plugs to be operating on the first surface, the bracket is secured to the edge of the box-shaped body by means of tightening screws that hold the plug in place with respect to the combustion area. The spark plug can thus trigger the combustion near the gas-dispensing holes.

Furthermore, in case the combustion surfaces are very large, a plurality of plugs may be provided, each secured to its bracket. In this case, the brackets are involved by means of the above-mentioned hooking systems and at the respective areas of the edge of the box-shaped body.

As a result, the flame ignition can occur simultaneously in different areas of the first surface, so that the flame can spread more widely and rapidly. However, the burners briefly described above have a major drawback.

It should be noted that the production of said burners is complicated and expensive, since it necessarily requires the coupling and connection of the said accessory holder support (brackets) to the box-shaped body. Consequently, assembling and installing the burner turn out to be long and complicated operations, being thus disadvantageous in terms of both production times and costs for each burner.

In this context, the technical task underlying the present invention is to propose a burner for an oven or grill able to overcome the drawbacks of the above-mentioned prior art.

In particular, it is an object of the present invention to provide a burner specifically intended for a grill able to limit the number of components and make their assembly easier, while ensuring the proper functionality of the burner.

An other object of the present invention is to provide a burner whose configuration is simple and inexpensive.

Said technical task mentioned and objects stated are basically achieved by a burner for an oven or grill comprising the technical specifications set out in one or more of the appended claims. The dependent claims correspond to different embodiments of the invention.

Further characteristics and advantages of the present invention will become more apparent from the description of an exemplary, but not exclusive, and therefore non-limiting preferred embodiment of a burner for the oven or grill, as illustrated in the appended figures, wherein:
- figures 1 and 2 display, respectively, perspective views from above and below of a burner for the oven or grill according to the present invention; and
- figure 3 displays a sectional and enlarged view of a construction detail of figure 1.

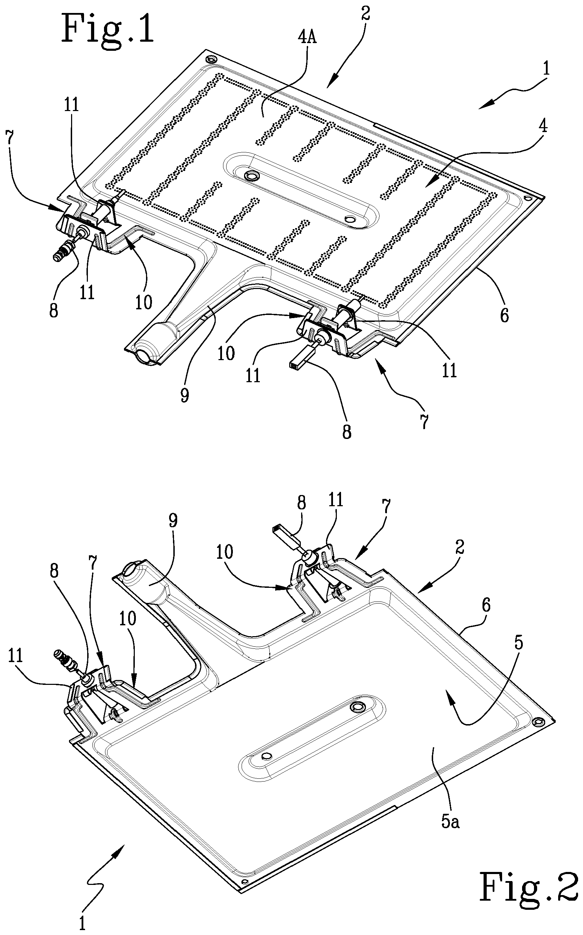

In the specific case of figures 1 and 2, reference numeral 1 has generally been used to identify a burner for ovens or grills according to the present invention.

It should be specified that the burner 1 provided by the present invention is mainly employed for grill functions. However, it should be noted that the burner 1 can also be used for furnaces or any other baking function.

The burner 1 comprises a body 2, having a substantially box-shaped configuration and defining inside a containment chamber 3 of a combustible fluid.

More specifically, the body 2 has a substantially flat configuration and expands peripherally in a rectangular shape.

However, it should be specified that the body 2 may take any shape depending on the various applications and constructive needs.

The body 2 is made of a first and a second plate-shaped portions 4, 5, mutually coupled at the respective peripheral edges 6.

Advantageously, each plate-shaped portion 4, 5 expands peripherally in a substantially rectangular shape having a convex area and a concave area defining the containment chamber 3 of the combustible fluid.

At the convex area, the first plate-shaped portion 4 also defines a first perforated surface 4a for the flow of the combustible fluid outwards.

At the convex area, the second plate-shaped portion 5 defines a second surface 5a opposite to the first surface 4a.

Advantageously, the first surface 4a comprises microholes arranged all along the first surface according to a predetermined design depending on the use of the burner 1.

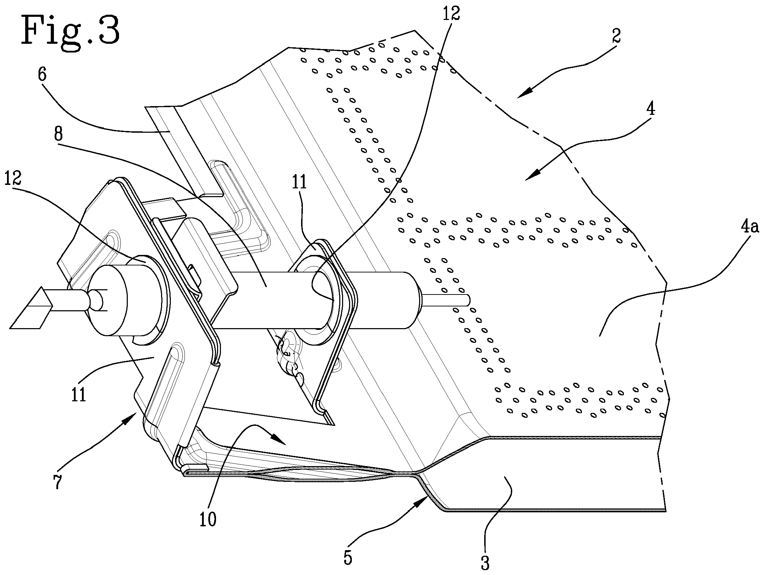

As can be seen in figures 1 and 2, the plate-shaped portions 4, 5 are mutually coupled at the respective peripheral edges 6. Therefore, in this configuration, the concave areas do not come into contact with each other, but define the width of the chamber 3 (figure 3).

The burner 1 further comprises at least one support element 7 of at least one accessory 8, such as a spark plug of the flame.

Preferably, the burner 1 comprises two support elements 7 arranged along the same edge of the box-shaped body 2.

It should be noted that, advantageously, between the two support elements 7 there is a connection duct 9 which puts the chamber 3 into fluid communication with a supply source of the combustible fluid 8, herein not illustrated as it is not part of the present invention.

More specifically, each support element 7 is associated with the box-shaped body 2 to place the accessory 8 at the first surface 4a. Advantageously, as best illustrated in detail in figure 3, each support element 7 is integrally formed with the respective plate-shaped portions 4, 5.

In particular, each plate-shaped portion 4, 5 comprises a protrusion 10 extending from the respective peripheral edge 6. The protrusions 10 of the portions 4, 5 are mutually coupled to define the support element 7.

Each protrusion 10 is defined by an area of the peripheral edge 6 extending from the development of the edge itself and along a lying plane substantially parallel to the lying plane of the said surfaces 4a, 5a.

In this situation, it should be noted that each plate-shaped portion 4, 5 with the respective protrusion 10 is made up of a single sheet of metal material. This sheet is suitably shaped through moulding operations, which determine both the shape of the portion 4, 5, and the shape the protrusion 10.

In the specific case of figure 3, it should be noted that each protrusion 10 has two tabs 11 folded transversely to the planar development of the protrusion 10 itself.

The tabs 11 have respectively through holes 12 designed for housing at least one respective accessory 8.

The tabs 11 are parallel to each other and the holes 12 are coaxially arranged to allow the housing of the accessory 8, which preferably has a substantially cylindrical form.

In this situation, the accessory, such as a spark plug, is arranged at least partially above the first surface 4a, in order to allow the ignition of the flame at the microholes.

Advantageously, the protrusions 10 of each portion 4, 5 thus obtained are associated with each other and in mutual contact to define a single laminar body. Consequently, the tabs 11 and the respective through holes 12 of the protrusions 10 correspond to each other (figure 3).

Advantageously, the support elements 7 of the accessories 8 are made in a single body with the portions 4, 5 defining the body 2.

Consequently, the body 2 does not have any additional/external elements suitable for fastening the supports 7. In other words, the supports 7 are integrated into the body and they are not joined by means of fastening systems or by means of welding to it.

The construction of the laminar portions and the protrusions 10 are then implemented by means of a single moulding operation on the metal sheet in order to shape the portions 4, 5, as well as to define the respective surfaces 4a, 5a and respective protrusions 10.

Subsequently, the portions 4, 5 are joined at the edges 6 by a single welding operation.

In this way, the burner 1 is structurally simpler and has very limited costs and production times.

## Claims

1. Burner for an oven or grill, comprising:
- a body (2) having box-shaped configuration and defining inside a containment chamber (3) of a combustible fluid;
- said body (2) having a first plate-shaped portion (4) provided with a first perforated surface (4a) for the passage of said fluid towards the outside, and a second plate-shaped portion (5) provided with a second surface (5a) opposite to the first surface (4a), said plate-shaped portions (4, 5) being mutually coupled at the respective peripheral edges (6); and
- at least a support element (7) of at least one accessory (8), said support element (7) being associated with the box-shaped body (2) to place the accessory (8) at the first surface (4a);
said support element (7) being formed integrally with the respective plate-shaped portions (4, 5);
each plate-shaped portion (4, 5) comprising a protrusion (10) extending from the respective peripheral edge (6) and defined by an area of the peripheral edge (6) extending from the development of the edge (6) itself and along a lying plane substantially parallel to said surfaces (4a, 5a), the protrusion (10) of the first portion (4) being coupled to the protrusion (10) of the second portion (5) to define the support element (7);
**characterized in that** each protrusion (10) has two tabs (11) bent transversely to the planar development of the protrusion (10) itself and presenting respective through holes (12) for housing at least one respective accessory (8); said protrusions (10) of each portion (4, 5) are associated and in mutual contact; said tabs (11) and said through holes (12) of said protrusions (10) being coincident with each other.

2. Burner according to the previous claim, **characterized in that** each plate-shaped portion (4, 5) and the related protrusion (10) are realized from a single sheet of metal material.

3. Burner according to any one of the previous claims, **characterized in that** each plate-shaped portion (5) comprises a substantially rectangular peripheral development and has a convex area defining the first or the second (4a, 5a) surface and a concave area defining said containment chamber (3) of the combustible fluid.

4. Burner according to claim 1, **characterized in that** said tabs (11) are parallel to each other and said holes (12) are arranged coaxially; said accessory (8) being bound to the holes (12) to be disposed at least partially above the first surface (4a).

5. Burner according to any one of the previous claims, **characterized in that** each portion (4, 5) has two protrusions (10) arranged on the same side of the peripheral edge (6).

6. Burner according to any one of the previous claims, **characterized in that** said first surface (4a) includes microholes arranged all along the first surface (4a) and according to a predefined design.

## Patentansprüche

1. Brenner für einen Ofen oder einen Grill, umfassend:
- einen Körper (2) aufweisend eine kastenförmige Konfiguration und innen definierend eine Enthaltekammer (3) eines brennbaren Fluids;
- wobei der Körper (2) einen ersten plattenförmigen Abschnitt (4), der mit einer ersten perforierten Oberfläche (4a) für den Durchgang des Fluids nach außen versehen ist, und einen zweiten plattenförmigen Abschnitt (5) aufweist, der mit einer zweiten Oberfläche (5a) gegenüber der ersten Oberfläche (4a) versehen ist, wobei die plattenförmigen Abschnitte (4, 5) an den jeweiligen Umfangskanten (6) miteinander gekoppelt sind; und
- mindestens ein Stützelement (7) von mindestens einem Zubehörteil (8), wobei das Stützelement (7) mit dem kastenförmigen Körper (2) assoziiert ist, um das Zubehörteil (8) an der ersten Oberfläche (4a) zu platzieren;
wobei das Stützelement (7) einstückig mit den jeweiligen plattenförmigen Abschnitten (4, 5) ausgebildet ist; wobei ein jeder plattenförmige Abschnitt (4, 5) einen Vorsprung (10) umfasst, der sich von der jeweiligen Umfangskante (6) erstreckt und durch einen Bereich der Umfangskante (6) definiert ist, die sich von der Ausdehnung der Kante (6) selbst und entlang einer Liegeebene erstreckt, die im Wesentlichen parallel zu den Oberflächen (4a, 5a) verläuft, wobei der Vorsprung (10) des ersten Abschnitts (4) mit dem Vorsprung (10) des zweiten Abschnitts (5) gekoppelt ist, um das Stützelement (7) zu definieren;
**dadurch gekennzeichnet, dass** ein jeder Vorsprung (10) zwei Laschen (11) aufweist, die quer zur planaren Ausdehnung des Vorsprungs (10) selbst gebogen sind und jeweilige Durchgangslöcher (12) aufweisen, um mindestens ein jeweiliges Zubehörteil (8) aufzunehmen; die Vorsprünge (10) eines jeden Abschnitts (4, 5) sind assoziiert und stehen in gegenseitigem Kontakt; wobei die Laschen (11) und die Durchgangslöcher (12) der Vorsprünge (10) zueinander zusammenfallend sind.

2. Brenner nach dem vorhergehenden Anspruch, **dadurch gekennzeichnet, dass** ein jeder plattenförmige Abschnitt (4, 5) und der zugehörige Vorsprung (10) aus einem einzigen Blech aus Metallmaterial hergestellt sind.

3. Brenner nach einem der vorhergehenden Ansprüche, **dadurch gekennzeichnet, dass** ein jeder plattenförmige Abschnitt (5) eine im Wesentlichen rechteckige Umfangsausdehnung umfasst und einen konvexen Bereich, der die erste oder die zweite (4a, 5a) Oberfläche definiert, und einen konkaven Bereich aufweist, der die Enthaltekammer (3) des brennbaren Fluids definiert.

4. Brenner nach Anspruch 1, **dadurch gekennzeichnet, dass** die Laschen (11) parallel zueinander verlaufen und die Löcher (12) koaxial angeordnet sind; wobei das Zubehörteil (8) an die Löcher (12) gebunden ist, um mindestens teilweise über der ersten Oberfläche (4a) angeordnet zu werden.

5. Brenner nach einem der vorhergehenden Ansprüche, **dadurch gekennzeichnet, dass** ein jeder Abschnitt (4, 5) zwei Vorsprünge (10) aufweist, die auf derselben Seite der Umfangskante (6) angeordnet sind.

6. Brenner nach einem der vorhergehenden Ansprüche, **dadurch gekennzeichnet ist, dass** die erste Oberfläche (4a) Mikrolöcher umfasst, die alle entlang der ersten Oberfläche (4a) und nach einer vordefinierten Konstruktion angeordnet sind.

## Revendications

1. Brûleur pour un four ou un gril, comprenant :
- un corps (2) ayant une configuration en forme de boîte et définissant en son sein une chambre de contenance (3) d'un fluide combustible ;
- ledit corps (2) comportant une première partie (4) en forme de plaque pourvue d'une première surface perforée (4a) pour le passage dudit fluide vers l'extérieur, et une seconde partie (5) en forme de plaque pourvue d'une seconde surface (5a) opposée à la première surface (4a), lesdites parties (4, 5) en forme de plaque étant mutuellement couplées aux bords périphériques (6) respectifs ; et
- au moins un élément de support (7) d'au moins un accessoire (8), ledit élément de support (7) étant associé au corps (2) en forme de boîte pour placer l'accessoire (8) en correspondance de la première surface (4a) ;
ledit élément de support (7) étant formé d'un seul tenant avec les parties (4, 5) en forme de plaque respectives ; chaque partie (4, 5) en forme de plaque comprenant une saillie (10) se prolongeant à partir du bord périphérique (6) respectif et définie par une zone du bord périphérique (6) se prolongeant à partir du développement du bord (6) lui-même et le long d'un plan d'appui substantiellement parallèle auxdites surfaces (4a, 5a), la saillie (10) de la première partie (4) étant couplée à la saillie (10) de la seconde partie (5) pour définir l'élément de support (7) ;
**caractérisé en ce que** chaque saillie (10) comporte deux languettes (11) pliées transversalement par rapport au développement planaire de la saillie (10) elle-même et présentant des trous traversants (12) respectifs servant à loger au moins un accessoire (8) respectif ; lesdites saillies (10) de chaque partie (4, 5) sont associées et en contact mutuel ; lesdites languettes (11) et lesdits trous traversants (12) desdites saillies (10) coïncidant les unes avec les autres.

2. Brûleur selon la revendication précédente, **caractérisé en ce que** chaque partie (4, 5) en forme de plaque et la saillie (10) correspondante sont réalisées à partir d'une seule feuille de matériau métallique.

3. Brûleur selon l'une quelconque des revendications précédentes, **caractérisé en ce que** chaque partie (5) en forme de plaque comprend un développement périphérique substantiellement rectangulaire et comporte une zone convexe définissant la première ou la seconde (4a, 5a) surface et une zone concave définissant ladite chambre de contenance (3) du fluide combustible.

4. Brûleur selon la revendication 1, **caractérisé en ce que** lesdites languettes (11) sont parallèles entre elles et lesdits trous (12) sont disposés coaxialement ; ledit accessoire (8) étant lié aux trous (12) pour être disposé au moins partiellement au-dessus de la première surface (4a) .

5. Brûleur selon l'une quelconque des revendications précédentes, **caractérisé en ce que** chaque partie (4, 5) comporte deux saillies (10) disposées du même côté du bord périphérique (6).

6. Brûleur selon l'une quelconque des revendications précédentes, **caractérisé en ce que** ladite première surface (4a) inclut des microtrous disposés tout le long de la première surface (4a) et selon un dessin prédéfini.
